# FASCICULE DE BREVET EUROPEEN

(11) **EP 2 125 496 B1**
(45) Date de publication et mention de la délivrance du brevet: **08.06.2011**
(21) Numéro de dépôt: 08762129.8
(22) Date de dépôt: 20.02.2008
(51) Int. Cl.: B62D 25/14

(54) **ENSEMBLE DE STRUCTURES DE PLANCHES DE BORD, SOUS-ENSEMBLE D'UNE TELLE STRUCTURE ET INSTALLATION POUR SA FABRICATION**
ARMATURENBRETTANORDNUNG, BAUGRUPPE DAFÜR UND ANLAGE ZUR HERSTELLUNG
DASHBOARD STRUCTURE ASSEMBLY, SUBASSEMBLY FOR SUCH STRUCTURE, AND EQUIPMENT FOR MAKING SAME

(30) Priorité: 21.02.2007 FR 0701226
(43) Date de publication de la demande: 02.12.2009
(73) Titulaire: Faurecia Interieur Industrie, 92000 Nanterre (FR)
(72) Inventeur: BAUDART, Laurent, F-60530 Fresnoy En Thelle (FR)
(74) Mandataire: Jacobson, Claude
(86) Numéro de dépôt international: PCT/FR2008/050282
(87) Numéro de publication internationale: WO 2008/110733

(56) Documents cités:
- WO-A-03/039831
- DE-A1- 4 232 846

## Description

La présente invention concerne un ensemble de structures de planches de bord de types différents, un sous-ensemble d'une structure de planche de bord, et une installation destinée à la fabrication d'un tel sous-ensemble.

L'invention concerne le problème posé par la fabrication de planches de bord destinées à des véhicules ayant des propriétés différentes. En particulier, elle concerne le problème posé par la fabrication de planches de bord destinées non seulement à des véhicules d'une gamme d'un constructeur particulier, mais aussi à des véhicules d'autres gammes de constructeurs différents.

La fabrication de différents sous-ensembles assemblés dans des automobiles est soumise à de nombreuses contraintes, notamment de sécurité. Ainsi, chaque sous-ensemble doit remplir des conditions de sécurité dans des situations diverses, qui nécessitent l'exécution d'essais de collision de divers types. Les fabricants des sous-ensembles, qui ont développé des solutions efficaces, souhaitent réutiliser le plus largement possible ces solutions, afin d'éviter le coût renouvelé des essais de certification du respect des différentes conditions de sécurité. Les fabricants de ces sous-ensembles cherchent donc à réutiliser au maximum des éléments et structures qui ont montré qu'ils remplissaient les conditions de sécurité nécessaires.

L'invention concerne une optimisation des éléments réutilisables, et plus précisément une nouvelle répartition des fonctions remplies par différents éléments des structures de planches de bord. Cette nouvelle répartition des fonctions se concrétise par la création d'un nouvel élément polyvalent incorporé à un sous-ensemble de structure de planche de bord.

On a déjà réalisé une traverse de planche de bord de véhicule automobile pouvant prendre des longueurs différentes pour convenir à des véhicules dont la distance entre les montants avant est différente. Ainsi, le document DE 42 32 846 décrit une traverse de planche de bord formée de deux tronçons de tube de section rectangulaire, ayant chacun un flasque de fixation d'extrémité, et reliés à leurs autres extrémités par un organe central. Cet organe central est une partie essentielle de la traverse puisqu'il assure la liaison rigide des deux parties d'extrémité. Il est aussi utilisé pour supporter divers éléments de la planche de bord.

Contrairement aux enseignements du document précité, l'invention met en oeuvre une structure de planche de bord dont la traverse comprend au moins un tube formé en une seule pièce, c'est-à-dire que chaque tube va d'un montant avant à l'autre. Cette disposition est favorable à l'obtention d'une résistance mécanique élevée pour un faible poids. La longueur du tube ou des tubes est facilement adaptée à la distance entre les montants avant par simple coupe à la longueur. Selon l'invention, un élément central polyvalent, identique pour toutes les planches de bord, est solidarisé au tube au moins, par exemple par surmoulage sur le tube ou les tubes de la traverse.

Plus précisément, l'invention concerne un ensemble de structures de planches de bord destinées à des véhicules ayant des distances différentes entre leurs montants avant de fixation de la planche de bord, de sorte que les longueurs des traverses des structures de planches de bord sont différentes, chaque structure comprenant deux flasques de fixation aux montants, au moins un tube de traverse, un support de colonne de direction et un groupe central ayant des fonctions d'interface avec au moins un groupe de climatisation, des conduits aérauliques et un support central ; selon l'invention, les flasques de fixation aux montants avant sont les mêmes pour toutes les structures de planches de bord, les tubes de traverse des différentes structures ont les mêmes propriétés, seule leur longueur étant adaptée à la distance comprise entre les montants avant, et le groupe central comprend un élément central polyvalent de matière plastique solidarisé au tube au moins, remplissant des fonctions d'interface avec un groupe de climatisation et des conduits aérauliques, les éléments centraux polyvalents de toutes les structures étant identiques.

L'invention concerne aussi un sous-ensemble de structure de planche de bord, qui comprend au moins un tube de traverse et un élément central polyvalent de matière plastique remplissant des fonctions d'interface avec un groupe de climatisation et des conduits aérauliques.

De préférence, le sous-ensemble comprend deux tubes de traverse sensiblement parallèles.

De préférence, l'élément central comprend essentiellement deux renforts reliant les deux tubes, et un cadre dépassant d'un côté du plan des deux tubes, l'espace compris entre les renforts, les tubes et le cadre étant destinés à loger une partie de groupe de climatisation.

De préférence, l'élément central polyvalent de matière plastique solidarisé au tube au moins est surmoulé sur le tube ou les tubes. Par exemple, l'élément central polyvalent est surmoulé autour de toute la périphérie de l'un des deux tubes et d'une partie seulement de la périphérie de l'autre tube.

De préférence, l'élément central polyvalent délimite en outre un organe de fixation d'appareil électronique.

L'invention concerne aussi une installation de fabrication de sous-ensembles de structure de planche de bord selon les paragraphes précédents, qui comprend un moule d'injection en deux parties au moins délimitant des passages de logement d'au moins un tube qui dépasse des limites du moule.

De préférence, l'installation comporte en outre au moins un dispositif de maintien intérieur de la paroi du tube pendant une opération d'injection.

De préférence, le dispositif de maintien est disposé au moins dans la partie solidarisée du tube.

L'un des avantages essentiels de l'invention est la réalisation, en une seule opération d'injection de matière plastique, d'un élément central polyvalent ayant de nombreuses fonctions de logement (groupe de climatisation), de résistance mécanique (renfort), de forme (conduits aérauliques), de support (fixation d'accessoires), etc. Comme l'élément central moulé par injection sur les tubes de traverse est le même non seulement pour toute une gamme de véhicules, mais aussi pour plusieurs gammes de véhicules, éventuellement de constructeurs différents, le coût du sous-ensemble de structure et donc de chaque structure de planche de bord peut être réduit.

D'autres caractéristiques et avantages de l'invention seront mieux compris à la lecture de la description qui va suivre d'un exemple de réalisation, faite en référence aux dessins annexés sur lesquels :
la figure 1 est une vue en perspective d'une traverse de planche de bord à deux tubes, de type connu ;
les figures 2, 3 et 4 représentent des éléments de la traverse de la figure 1 ;
la figure 5 représente un sous-ensemble d'habillage de planche de bord destiné à être associé à la traverse représentée sur la figure 1 ;
la figure 6 est une vue en perspective d'un sous-ensemble de structure de planche de bord selon l'invention, muni de flasques de fixation ; et
la figure 7 représente une variante de l'élément de la figure 3, constituant un exemple d'élément qui doit pouvoir varier selon le véhicule équipé de la planche de bord.

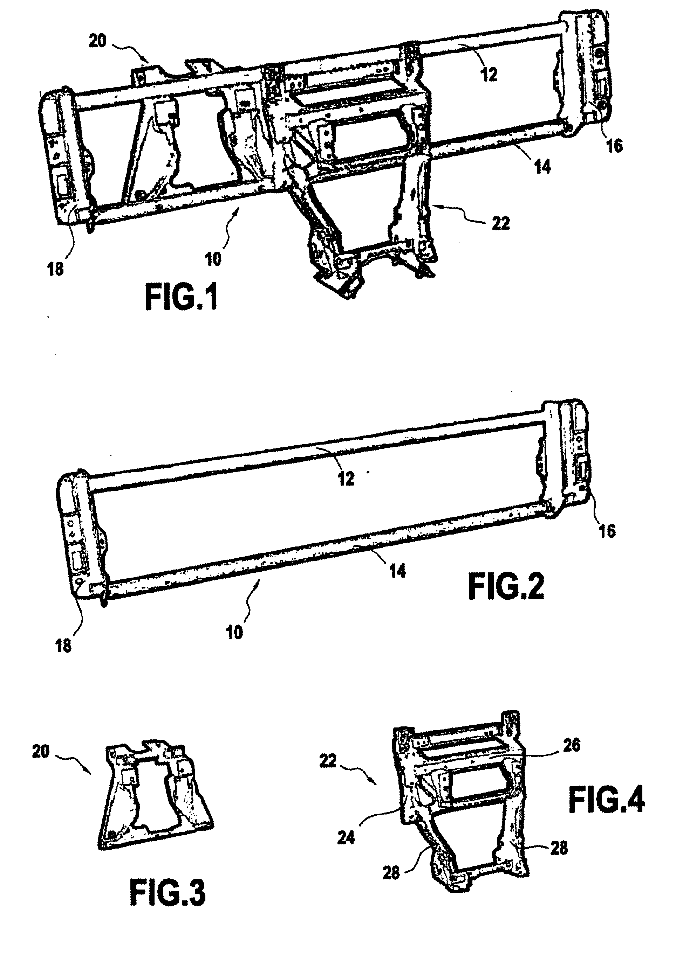

Les figures 1 à 4 représentent un exemple de structure de traverse de planche de bord 10. La traverse comporte deux tubes 12, 14, représentés parallèles l'un à l'autre, reliés à leurs extrémités par deux flasques 16, 18 de fixation aux montants avant d'un véhicule automobile. Les deux tubes 12, 14 portent un support de colonne de direction 20, mieux représenté sur la figure 3, et un élément central 22 ayant diverses fonctions. Comme l'indique plus clairement la figure 4, cet élément central 22 comprend deux renforts 24 raccordés aux deux tubes 12, 14, portant un cadre 26 qui est décalé par rapport au plan des deux tubes 12, 14. Des pieds 28 fixés au plancher ou à une console centrale fixent la traverse. L'espace dégagé entre les deux pieds 28, le cadre 26 et les renforts 24 peut être occupé par une partie de groupe de climatisation.

Dans certains cas, l'élément central 22 n'a qu'un seul pied 28. Fréquemment, le pied ou les pieds 28 sont fixés à une commande de boîte de vitesses.

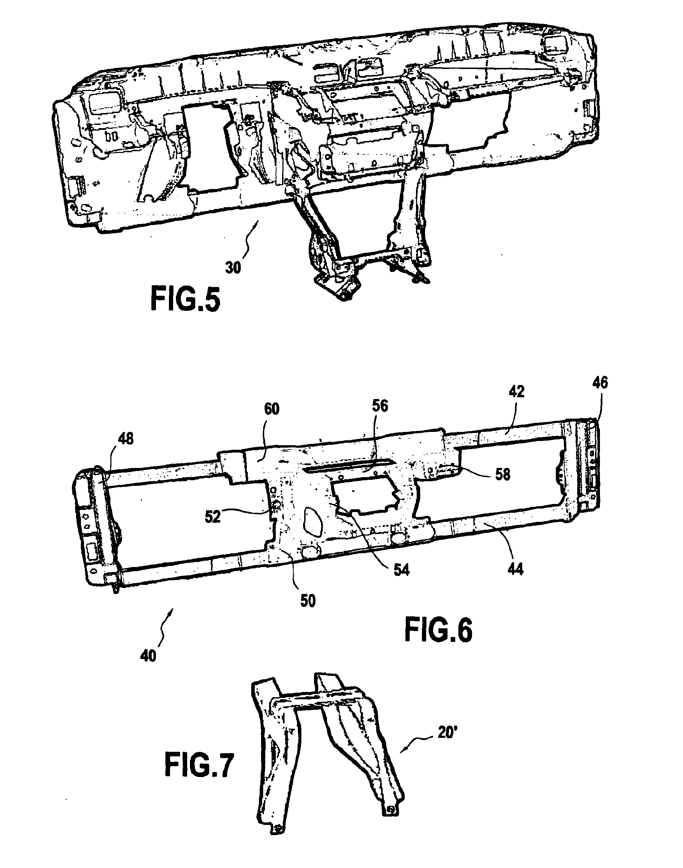

Selon la technique habituelle, un même constructeur de sous-ensembles de structure de planche de bord réalise des traverses dont les tubes 12, 14 ont des longueurs différentes. Les supports de colonne de direction 20 sont différents selon les constructeurs, ces supports pouvant être par exemple en acier comme indiqué sur la figure 3 ou en magnésium comme indiqué par la référence 20' sur la figure 7.

De même, l'élément central 22 varie suivant les types ou gammes de véhicules, par exemple selon qu'il n'existe qu'un pied 28, que les pieds 28 sont fixés à un type particulier de commande de boîte de vitesses, etc.

Un autre sous-ensemble de structure de planche de bord, désigné par la référence 30 sur la figure 5, est destiné à venir s'appliquer sur le sous-ensemble représenté sur la figure 1, auquel il est fixé notamment sur les côtés au niveau des flasques de fixation. Ce sous-ensemble 30 a diverses fonctions, notamment la délimitation des conduits aérauliques et le support des divers instruments de la planche de bord. Ce sous-ensemble 30 est spécifique d'un constructeur ou d'une gamme de véhicules.

L'invention a pour objet la réalisation d'un sous-ensemble de structure de planche de bord qui peut être utilisé en commun dans tous les véhicules non seulement d'une gamme de véhicules d'un constructeur, mais aussi de diverses gammes de véhicules, même de constructeurs différents.

On pourrait utiliser la traverse représentée sur la figure 2 en commun, en modifiant simplement la longueur des tubes 12, 14. Cependant, il s'agit d'un élément simple qui ne donne qu'un avantage réduit. Ainsi, bien que cette variation de longueur des tubes 12, 14 soit indispensable, elle n'est pas à même à elle seule de présenter un intérêt important.

Par contre, des avantages importants sont obtenus selon l'invention par réalisation d'un sous-ensemble commun de structure de planche de bord plus élaboré que le simple cadre de la figure 2.

Dans le mode de réalisation considéré de l'invention, deux tubes 42, 44, ayant la longueur déterminée par la distance comprise entre les montants avant du véhicule auquel est destiné le sous-ensemble, sont solidarisés, par exemple par tenue par des vis ou boulons, par collage, par rivetage ou par bouterollage, mais de préférence par surmoulage : les tubes sont disposés dans un moule d'injection afin que seules leurs parties centrales soient à l'intérieur du moule, les extrémités des tubes 42, 44 dépassant des deux côtés du moule. Le moule est fermé et un élément central polyvalent est moulé par injection, afin qu'il assure le surmoulage de l'un au moins des tubes.

Un tel procédé est décrit par le document WO 03/039831.

Plus précisément, l'élément central surmoulé 50 comprend essentiellement, en plus des parties de surmoulage des tubes, des renforts transversaux 52 et un cadre 54 placé à distance du plan contenant les deux tubes 42, 44. A un bord du cadre, comme indiqué en 56, ou sur des organes moulés supplémentaires 58 sont disposés divers organes de fixation, tels que des trous, des rainures, des saillies, des gorges, etc. destinés à la fixation de différents accessoires.

Ainsi, le sous-ensemble 40 représenté sur la figure 6, dont la longueur des tubes 42 et 44 correspond à une largeur particulière entre les montants avant du véhicule, après qu'il a été muni de ses flasques de fixation 46 et 48, constitue un sous-ensemble qui existe avec plusieurs longueurs de tubes, mais qui par ailleurs est le même. Tous ces sous-ensembles constituent l'ensemble de structures de planches de bord selon l'invention.

L'élément central polyvalent 50 remplit des fonctions de renfort mécanique, de logement (notamment de la partie supérieure du groupe de climatisation), de délimitation de tronçons de tubes aérauliques, comme indiqué par exemple par la référence 60, et de fixation de différents accessoires qui peuvent varier selon les véhicules.

Le sous-ensemble représenté sur la figure 6 peut ensuite être muni d'un support de colonne de direction, tel que représenté sur la figure 3 ou sur la figure 7, et d'un élément de raccordement spécialement adapté à une console centrale ou un plancher du véhicule particulier.

Il peut alors être associé au sous-ensemble 30 représenté sur la figure 5, dont la forme est adaptée à un type particulier de véhicule ou à une gamme particulière de véhicules.

Ainsi, l'invention concerne un ensemble de structures de planche de bord qui ont des longueurs différentes entre des montants avant de véhicule et qui cependant permettent la réutilisation des fonctions remplies par le sous-ensemble représenté sur la figure 6.

Un tel sous-ensemble est réalisé avec une installation qui comprend une presse d'injection et, de préférence, des dispositifs de maintien de l'intérieur des tubes afin qu'ils ne s'écrasent pas. On peut à cet effet se référer au document WO 03/039831 qui décrit un procédé et un ensemble de surmoulage de tubes soumis à des pressions élevées d'injection.

Un avantage important de l'invention est que la structure représentée sur la figure 6 est telle que chaque structure de planche de bord réalisée respecte les conditions de sécurité, notamment en cas de collision dans la direction longitudinale du véhicule. Grâce à leurs éléments communs, les planches de bord réalisées n'ont pas à subir systématiquement toute la gamme d'essais réels de collision pour la détermination du respect des normes imposées.

Etant donné en outre la réalisation par simple injection d'un grand nombre de fonctions du sous-ensemble de planche de bord, les planches de bord réalisées peuvent avoir un coût réduit par rapport à celui des planches de bord classiques dans lesquelles toute la partie centrale doit être réalisée spécifiquement pour chaque type de véhicule, ou au moins pour chaque gamme de véhicules.

Bien qu'on ait décrit un sous-ensemble à deux tubes, l'invention s'applique aussi à des sous-ensembles à un seul tube.

L'invention décrite est particulièrement bien adaptée à divers véhicules automobiles, aussi bien des véhicules légers que des camions.

## Revendications

1. Ensemble de structures de planches de bord destinées à des véhicules ayant des distances différentes entre leurs montants avant de fixation de la planche de bord, de sorte que les longueurs des traverses des structures de planches de bord sont différentes, chaque structure comprenant deux flasques (46, 48) de fixation aux montants, au moins un tube de traverse (42, 44), un support de colonne de direction et un groupe central ayant des fonctions d'interface avec au moins un groupe de climatisation, des conduits aérauliques et un support central, **caractérisé en ce que**
- les flasques (46, 48) de fixation aux montants avant sont les mêmes pour toutes les structures de planches de bord,
- les tubes de traverse (42, 44) des différentes structures ont les mêmes propriétés, seule leur longueur étant adaptée à la distance comprise entre les montants avant, et
- le groupe central comprend un élément central polyvalent (50) de matière plastique solidarisé au tube au moins (42, 44), remplissant des fonctions d'interface avec un groupe de climatisation et des conduits aérauliques, les éléments centraux polyvalents (50) de toutes les structures étant identiques.

2. Sous-ensemble de structure de planche de bord appartenant à un ensemble de structures selon la revendication 1, **caractérisé en ce qu'**il comprend au moins un tube de traverse (42, 44) et un élément central polyvalent (50) de matière plastique remplissant des fonctions d'interface avec un groupe de climatisation et des conduits aérauliques.

3. Sous-ensemble selon la revendication 2, **caractérisé en ce qu'**il comprend deux tubes de traverse (42, 44) sensiblement parallèles.

4. Sous-ensemble selon la revendication 3, **caractérisé en ce que** l'élément central (50) comprend essentiellement deux renforts (52) reliant les deux tubes (42, 44), et un cadre (54) dépassant d'un côté du plan des deux tubes (42, 44), l'espace compris entre les renforts (52), les tubes (42, 44) et le cadre (54) étant destiné à loger une partie de groupe de climatisation.

5. Sous-ensemble selon l'une quelconque des revendications 2 à 4, **caractérisé en ce que** l'élément central polyvalent (50) de matière plastique solidarisé au tube au moins (42, 44) est surmoulé sur le tube ou les tubes (42, 44).

6. Sous-ensemble selon la revendication 5, **caractérisé en ce que** l'élément central polyvalent (50) est surmoulé autour de toute la périphérie de l'un des deux tubes (42, 44) et d'une partie seulement de la périphérie de l'autre tube.

7. Sous-ensemble selon l'une quelconque des revendications 2 à 6, **caractérisé en ce que** l'élément central polyvalent (50) délimite en outre un organe (56, 58) de fixation d'appareil électronique.

## Claims

1. Set of dashboard structures intended for vehicles having various different distances between their front pillars for fastening the dashboard, so that the lengths of the dashboard structure cross members are different, each structure comprising two flanges (46, 48) for fastening to the pillars, at least one cross member tube (42, 44), a steering column support and a central unit having functions of an interface with at least one air conditioning unit, air ducts and a central support, **characterised in that**
- the flanges (46, 48) for fastening to the front pillars are the same for all the dashboard structures,
- the cross member tubes (42, 44) of the various different structures have the same properties, only their length being adapted to the distance between the front pillars and
- the central unit comprises a multi-purpose central element (50) made of plastic secured to the tube at least (42, 44), performing the functions of an interface with an air conditioning unit and air ducts, the multi-purpose central elements (50) of all the structures being identical.

2. Dashboard structure sub-assembly belonging to a set of structures according to claim 1, **characterised in that** it comprises at least one cross member tube (42, 44) and a multi-purpose central element (50) made of plastic, performing functions of an interface with an air conditioning unit and air ducts.

3. Sub-assembly according to claim 2, **characterised in that** it comprises two substantially parallel cross member tubes (42, 44).

4. Sub-assembly according to claim 3, **characterised in that** the central element (50) essentially comprises two reinforcing pieces (52) connecting the two tubes (42, 44) and a frame (54) protruding, on one side, from the plane of the two tubes (42, 44), the space between the reinforcing pieces (52), the tubes (42, 44) and the frame (54) being intended for housing a portion of air conditioning unit.

5. Sub-assembly according to any of claims 2 to 4, **characterised in that** the multi-purpose central element (50), made of plastic, secured to the tube at least (42, 44) is over-moulded on to the tube or tubes (42, 44).

6. Sub-assembly according to claim 5, **characterised in that** the multi-purpose central element (50) is over-moulded around the entire periphery of one of the two tubes (42, 44) and around only a portion of the periphery of the other tube.

7. Sub-assembly according to any of claims 2 to 6, **characterised in that** the multi-purpose central element (50) also defines an electronic equipment fastening component (56, 58).

## Patentansprüche

1. Armaturenbrettanordnung, bestimmt für Kraftfahrzeuge mit unterschiedlichen Abständen zwischen ihren vorderen Pfosten bzw. Stützen zur Befestigung des Armaturenbretts, so dass die Längen der Querträger der Armaturenbrettanordnung unterschiedlich sind, wobei jede Anordnung zwei Flansche (46, 48) zur Befestigung an den Pfosten, wenigstens ein Traversenrohr (42, 44), eine Lenksäulenstütze und einen zentralen Block mit Schnittstellenfunktionen mit wenigstens einem Klimablock, Luftkanälen und einer zentralen Auflage umfasst,
**dadurch gekennzeichnet, dass**
- die Flansche (46, 48) zur Befestigung an den vorderen Pfosten bzw. Stützen für alle Armaturenbrettanordnungen gleich sind,
- die Traversenrohre (42, 44) der verschiedenen Anordnungen die gleichen Eigenschaften haben, wobei nur ihre Länge an den zwischen den vorderen Pfosten enthaltenen Abstand angepasst ist, und
- der zentrale Block ein an dem wenigstens einen Rohr (42, 44) befestigtes zentrales Mehrzweckelement (50) aus Kunststoff umfasst, das Schnittstellenfunktionen mit einem Klimablock und Luftkanälen erfüllt, wobei die zentralen Mehrzweckelemente (50) aller Anordnungen identisch sind.

2. Armaturenbrettanordnungs-Baugruppe, zu einer Anordnung nach Anspruch 1 gehörend, **dadurch gekennzeichnet, dass** sie wenigstens ein Traversenrohr (42, 44) und ein zentrales Mehrzweckelement (50) aus Kunststoff umfasst, das Schnittstellenfunktionen mit einem Klimablock und Luftkanälen erfüllt.

3. Baugruppe nach Anspruch 2, **dadurch gekennzeichnet, dass** sie zwei im Wesentlichen parallele Traversenrohre (42, 44) umfasst.

4. Baugruppe nach Anspruch 3, **dadurch gekennzeichnet, dass** das zentrale Mehrzweckelement (50) im Wesentlichen zwei die Rohre (42, 44) verbindende Verstärkungen (52) und einen Rahmen (54) umfasst, der auf einer Seite aus der Ebene der beiden Rohre (42, 44) herausragt, wobei der zwischen den Verstärkungen (52), den Rohren (42, 44) und dem Rahmen (54) enthaltene Zwischenraum dazu bestimmt ist, einen Teil des Klimablocks aufzunehmen.

5. Baugruppe nach einem der Ansprüche 2 bis 4, **dadurch gekennzeichnet, dass** das an dem wenigstens einen Rohr (42, 44) befestigte zentrale Kunststoff-Mehrzweckelement (50) auf das Rohr oder die Rohre (42, 44) aufgespritzt ist.

6. Baugruppe nach Anspruch 5, **dadurch gekennzeichnet, dass** das zentrale Mehrzweckelement (50) über den gesamten Umfang eines der beiden Rohre (42, 44) herum und nur einen Teil des Umfangs des anderen Rohrs aufgespritzt ist.

7. Baugruppe nach einem der Ansprüche 2 bis 6, **dadurch gekennzeichnet, dass** das zentrale Mehrzweckelement (50) außerdem ein Organ (56, 58) zur Befestigung von elektronischem Gerät umfasst.
